# NEW EUROPEAN PATENT SPECIFICATION

(11) **EP 2 684 186 B2**
(45) Date of publication and mention of the opposition decision: **19.07.2023**
(45) Mention of the grant of the patent: 18.05.2016
(21) Application number: 12708930.8
(22) Date of filing: 05.03.2012
(51) Int. Cl.: G10K 9/122, G10K 9/20, G01S 7/521

(54) **PROCESS FOR THE MANUFACTURE OF A SENSOR DEVICE USABLE IN PARKING-AID SYSTEMS FOR VEHICLES AND CORRESPONDING SENSOR DEVICE**
VERFAHREN ZUR HERSTELLUNG EINER SENSORVORRICHTUNG ZUR VERWENDUNG IN EINEM EINPARKHILFESYSTEM EINES FAHRZEUGS UND ENTSPRECHENDE SENSORVORRICHTUNG
PROCÉDÉ POUR LA FABRICATION D'UN DISPOSTIF DE DÉTECTION UTILISABLE DANS UN SYSTÈME D'ASSISTANCE AU PARKING D'UN VÉHICULE ET DISPOSITIF DE DÉTECTION CORRESPONDANT

(30) Priority: 07.03.2011 IT MO20110053
(43) Date of publication of application: 15.01.2014
(73) Proprietor: Meta System S.p.A., 42124 Reggio Emilia (IT)
(72) Inventor: SIMONAZZI, Giuseppe, 42123 Reggio Emilia (IT)
(74) Representative: Brunacci, Marco
(86) International application number: PCT/IB2012/000407
(87) International publication number: WO 2012/120354

(56) References cited:
- DE-A1- 3 441 684
- DE-A1- 4 329 055
- DE-A1- 10 125 272
- DE-A1- 10 156 259
- DE-A1- 10 221 303
- DE-A1- 19 601 656
- DE-A1- 19 835 782
- DE-A1-102006 028 213
- US-A- 4 918 672
- US-A- 5 648 697
- US-A1- 2006 241 474
- copy of the Oxford Dictionary website relating to the term 'encapsulate" (https://en.oxforddictionaries.com/definlt iortfus/encapsulate)
- first page of the Wikipedia contribution in german to the term"polymer" (https://de.wikipedia.org/wiki/Polymer)
- first page of the Wikipedia contribution in german to the term"plastic" (https://de wikipedia.org/wiki/Kunststoff)

## Description

### Technical Field

The present invention relates to a process for the manufacture of a sensor device, in particular for the manufacture of a proximity and/or position sensor device installable on motor vehicles and usable in parking-aid systems or the like.

### Background Art

The use is known of proximity sensors installable on motor vehicles and suitable for detecting the position of obstacles in parking-aid systems. A particular type of such sensors contemplates the sending of an ultrasonic signal and the receiving of any echo-reflected signals off one or more objects. Such ultrasonic sensors generally comprise a shell made of metal material, e.g., aluminium, containing a transducer element of the piezoelectric type suitable for converting an electric signal into a respective ultrasonic signal and vice versa. Commonly, the metal shell has a cylindrical shape and comprises a portion of flat surface suitable for transmitting and receiving ultrasonic signals and a substantially opposite and open portion from which extend electric connection means of the type, e.g., of a pair of parallel metal rheophores or, alternatively, a pair of power cables terminating in a connection socket.

The electric connection means allow, in particular, the connection of the transducer to an electric control unit installed on board the vehicle and suitable for controlling the transmission of the ultrasonic signals and the processing of the echo signals received.

To allow the use in parking-aid systems, the sensor is commonly housed inside a support in polymer material.

A suitable seal made of silicone or similar materials is generally placed in between the outer surface of the sensor shell and the inner surface of the support; this ensures a better fastening of the sensor inside the support and, at the same time, permits the attenuation of the ultrasonic signals transmitted laterally, so as to irradiate the beam of ultra-sounds only from the front portion of the sensor.

The support is suitably shaped and associable in correspondence to a hole on the rear and/or front mudguard of a motor vehicle, with the aforementioned transmitting and receiving surface of the sensor turned outwards. The support has an electric interface circuit connectable to the metal rheophores or power cables of the sensor and is suitable for communicating with the unit installed on the vehicle and for controlling signal transmission/receiving. The support, furthermore, can be equipped with a suitable connector connectable to a complementary connector of a cable connected to the unit. In actual facts, the process for the manufacture of the sensor device of known type comprises the following steps:
- manufacturing the cylindrical shell in metal material;
- positioning and fastening the piezoelectric transducer inside the cylindrical shell, in correspondence to the flat surface intended for transmitting/receiving ultrasonic signals;
- connecting the pair of metal terminals or power cables to the piezoelectric transducer;
- filling the shell with electrically and mechanically insulating material such as, e.g., a synthetic resin, silicone or similar materials.

Moreover, the preparation of such sensor device for the installation on a motor vehicle and the use in parking-aid systems comprises the following steps:
- positioning a suitable seal in silicone (or similar materials) around the sensor shell;
- positioning the sensor with the seal in silicone inside the support in polymer material;
- locking the sensor inside the support, e.g. by means of a suitable locking ring in polymer material, which can be fastened to a portion of the support;
- positioning and fixing inside the support a suitable electronic circuit which can interface with the unit installed on the vehicle;
- realizing the electric connection between the rbeophores/cables of the sensor and the electric interface circuit;
- filling the support with an insulating material, such as, e.g. synthetic resin, silicone or similar materials.

Consequently, the process for the manufacture of known sensors and preparation of same for installation on a vehicle is complex. In particular, the fitting of a sensor inside its relative support before installation on the vehicle necessarily calls for the use of professional personnel who have to work for a fairly long time.

US 2006/ 0241474 A1 discloses a sensor device adapted to be used for parking assistance in a vehicle and comprising a support body of polymeric material defining two hollow portions to be filled separately by an insulating material.

### Description of the Invention

The main aim of the present invention is to provide a process for the manufacture of a sensor device, in particular of a sensor device usable in parking-aid systems, which allows to sensitively reduce costs and time for the manufacture of a sensor and preparation of same for installation on a vehicle. Another object of the present invention is to provide a process for the manufacture of a sensor device, in particular of a sensor device usable in parking-aid systems for vehicles that allows overcoming the mentioned drawbacks of the state of the art in the ambit of a simple, rational, easy and effective to use solution.

The above mentioned objects are achieved by the present process for the manufacture of a sensor device, in particular of a sensor device usable in parking-aid systems for vehicles, characterized as defined in claim 1. The objects are further achieved by a sensor device, usable in parking-aid systems for vehicles, characterized as defined in claim 10.

### Brier Description of the Drawings

Other characteristics and advantages of the present invention will become more evident from the description of a preferred, but not sole, embodiment of a process for the manufacture of a sensor device, in particular of a sensor device usable in parking-aid systems for vehicles, illustrated purely as an example but not limited to the annexed drawings in which:

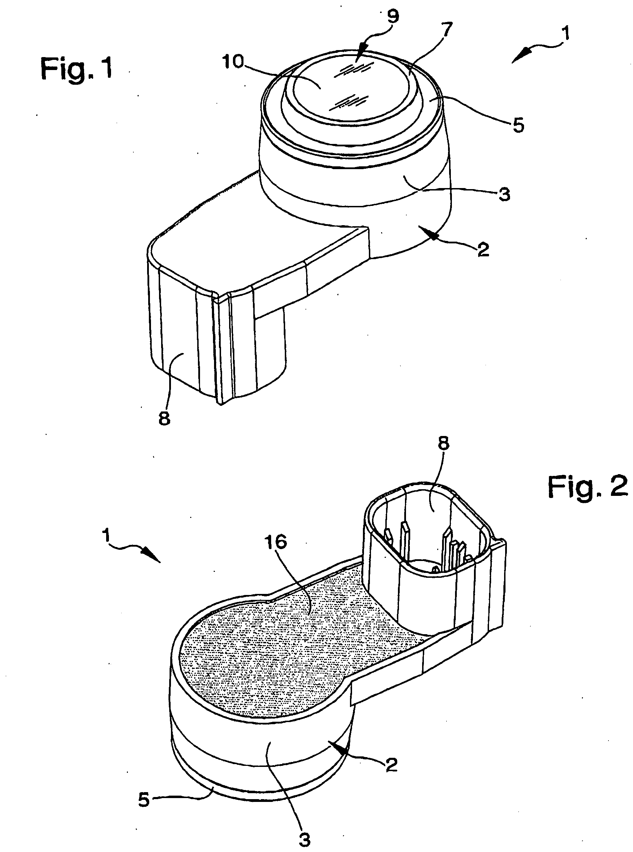

Figures 1 and 2 are axonometric views of the sensor device manufactured through the process according to the invention;
Figures from 3 to 6 are lateral and section views which illustrate the stages of the process according to the invention.

### Embodiments of the Invention

With particular reference to such illustrations, globally indicated by 1 is a particular embodiment of a sensor device which can be manufactured through the process described here below.

In particular, the sensor device 1 is of the type of an ultrasonic sensor installable on the mudguards of a vehicle and usable in parking-aid systems to detect the presence of obstacles in the proximity of the vehicle.

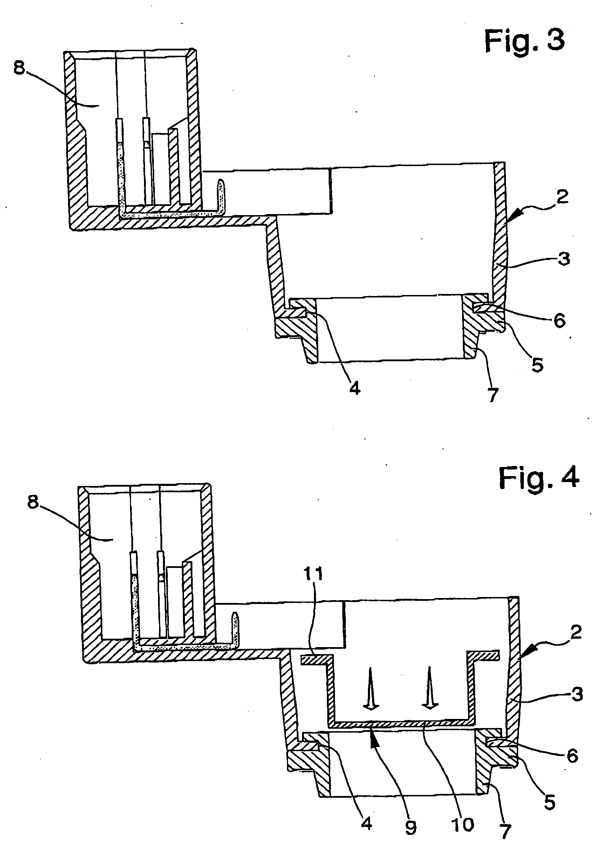

The process according to the invention comprises the manufacture of a support body in polymer material, globally indicated in the illustrations by 2. As illustrated in particular in figure 3, the support body 2 comprises a shell 3 made in plastic material, hollow and with a opening 4.

With particular but not sole reference to the embodiment of the sensor device 1 shown in the illustrations, the shell 3 has a substantially cylindrical shape and has a portion with the opening 4 and an opposite open portion to allow accessing the inside of the shell itself during fitting.

The support body 2 also comprises a seal 5 in silicone or the like, with a substantially annular shape, obtained along the perimeter of the opening 4.

The seal 5 has an annular groove 6 inside which is arranged the edge of the shell 3 which delimits the opening 4.

The seal 5 also has a neck 7 which extends from the opening 4 along a direction at right angles to the resting plane of the opening itself.

Advantageously, the realisation of the support body 2 shown in figure 3 can comprise the realisation of both the shell 3 in plastic material and of the seal 5 in silicone by means of a single overmoulding operation. This allows limiting or simplifying the subsequent fitting stages.

Alternatively, the realisation of the support body 2 shown in figure 3 can comprise the following stages:
- moulding of the shell 3 in plastic material;
- moulding of the seal 5 in silicone;
- fastening the seal 5 to the shell 3 by interlocking, inside the opening 4.

Usefully, the support body 2 can also comprise an electric connector 8 suitable for being connected by means of a special cable with a complementary connector to a parking-aid unit for vehicles.

In this case, the electric connector 8 can be made of plastic material and be in a single body with the shell 3 and, consequently, the process can comprise a single moulding stage of the electric connector 8, having respective electric terminals, with the shell 3.

The process according to the invention also comprises the realisation of a metal element 9 having a plate-shaped portion 10 and the fastening of the metal element 9 made this way to the shell 3, with the plate-shaped portion 10 arranged in correspondence to the opening 4.

With particular reference to the embodiment shown in the illustrations, the metal element 9 has a substantially cylindrical shape and has an extremity with a circular plate-shaped portion 10 and an opposite open extremity. Along the edge of the open extremity, the metal element 9 has a fold 11 overhanging outwards.

Advantageously, as shown in figure 4, the fastening of the metal element 9 to the shell 3 can be done by inserting to measure the metal element itself inside the seal 5 in silicone fitted around the opening 4.

When the metal element 9 has been completely fitted, the fold 11 is engaged against the portion of the seal 5 inside the shell 3, while the plate-shaped portion 10 is substantially on the same lying plane as the edge of the neck 7 of the seal itself.

The process according to the invention also comprises the positioning of a transducer element 12 inside the shell 3, in correspondence to the inner surface of the plate-shaped portion 10 of the metal element 9.

Preferably, the transducer element 12 is composed of a piezoelectric transducer suitable for transmitting ultrasonic signals and receiving echo-reflected signals. Alternatively, the process according to the invention can comprise the fitting inside the seal 5 of the metal element 9 already having a transducer element 12 covered with a layer of insulating material, e.g., a synthetic resin, silicone or similar materials.

In this case, the process comprises the following steps in sequence:
- associating a transducer element 12 with the substantially plate-shaped portion 10 of the metal element 9;
- covering the transducer element 12 with an insulating material;
- fitting the metal element 9 with the transducer element 12 thus covered inside the seal 5.

Usefully, the transducer element 12 can be placed between the plate-shaped portion 10 of the metal element 9 and a sound-absorbing element 13 associated with the metal element itself and suitable for limiting the undesired diffusion of the ultrasonic signals inside the shell 3.

The sound-absorbing element 13 can be composed of a special sponge.

In particular, in this case, the process according to the invention can comprise the fitting to measure of the sound-absorbing element 13 inside the metal element 9.

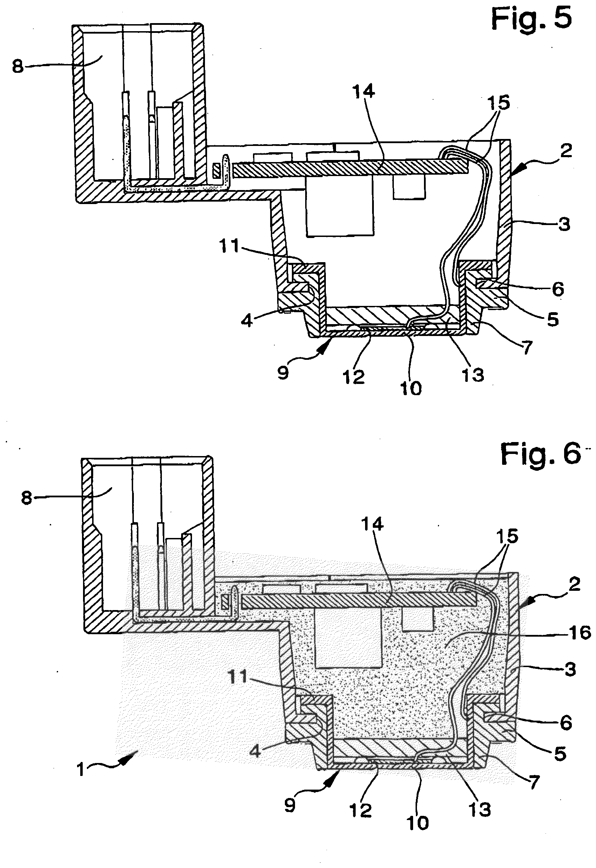

Subsequently, as shown in the figure 5, the process according to the invention comprises the positioning inside the shell 3 of electronic interface means 14 suitable for being connected to an electronic unit for parking-aid systems for vehicles.

In particular, with reference to the embodiment shown in the illustrations, the electronic interface means 14 are composed of a specific electronic circuit suitable for controlling the signals transmitted by means of the transducer element 12 and processing the signals received from the transducer element 12. The process then comprises the connection of the transducer element 12 to the electronic circuit 14 by means of specific power cables 15 and the connection of the electronic circuit 14 to the electric connector 8 connectable to the parking-aid unit.

As shown in figure 6, the process according to the invention finally comprises the filling of the shell 3 with insulating material 16 made up, for example, of a synthetic resin, silicone or similar materials.

The sensor device 1 obtainable with the process just described is shown in the figures 1, 2 and 6.

The sensor device 1 comprises the support body 2, made up of the cylindrical shell 3, the electric connector 8 and the seal 5 in silicone.

The metal element 9 is fitted to measure inside the seal 5.

The sensor device 1 also has the transducer element 12, which is arranged in correspondence to the plate-shaped portion 10 of the metal element 9 and which is fastened in such position by the sponge 13 and by the filling with insulating material 16.

The transducer element 12 is connected to the electric connector 8 and to the electronic connector 14 by means of the power cables 15.

It has in practice been ascertained how the described invention achieves the proposed objects.

In particular, the fact is underlined that the process according to the invention permits considerably reducing the costs and the manufacturing times of a sensor and the preparation of same for installation on a vehicle.

## Claims

1. Process for the manufacture of a sensor device (1) usable in parking-aid systems for vehicles, comprising the steps of:
- manufacturing at least a support body (2) made of polymer material, said support body (2) being substantially hollow and having at least an opening (4);
- wherein said step of manufacturing the support body (2) comprises making on said support body (2) at least an electric connector (8) suitable for being connected to an electronic unit for the parking aid of vehicles;
- manufacturing at least a metal element (9) having at least a substantially plate-shaped portion (10);
- associating said metal element (9) with said support body (2), with said substantially plate-shaped portion (10) of the metal element (9) in correspondence to said opening (4) of the support body (2);
- associating at least a transducer element (12) with said substantially plate-shaped portion (10) of the metal element (9);
- positioning inside said support body (2) electronic interface means (14) suitable for being connected to an electronic unit for the parking aid of vehicles;
- connecting electronically said transducer element (12) to said electronic interface means (14);
- connecting electronically said electronic interface means (14) to said electric connector (8);
- filling said support body (2) with an insulating material (16) adapted to encapsulate said transducer element (12) and said electronic interface means (14).

2. Process according to the claim 1, wherein said step of manufacturing the support body (2) comprises the moulding of at least a shell (3) made of plastic material having said opening (4).

3. Process according to one or more of the preceding claims, wherein said step of manufacturing the support body (2) comprises the moulding of at least a seal (5) in silicone or the like.

4. Process according to the claims 2 and 3, wherein said step of manufacturing the support body (2) comprises the positioning of said seal (5) in correspondence to said opening (4) of the shell (3).

5. Process according to the claims 2 and 3, wherein said shell (3) and said seal (5) are obtained by co-moulding between said plastic material and said silicone or the like, said seal (5) being positioned in correspondence to said opening (4) of the shell (3).

6. Process according to the claims 4 or 5, wherein said step of associating the metal element (9) with the support body (2) comprises the fitting of said metal element (9) inside said seal (5) in silicone.

7. Process according to one or more of the preceding claims, comprising the following steps:
- said step of associating at least a transducer element (12) with said substantially plate-shaped portion (10) of the metal element (9);
- covering at least partially said transducer element (12) associated with said substantially plate-shaped portion (10) with an insulating material;
- said step of associating said metal element (9) with said support body (2), with said substantially plate-shaped portion (10) of the metal element (9) in correspondence to said opening (4) of the support body (2).

8. Process according to one or more of the preceding claims, wherein said electronic interface means (14) comprise at least an electronic circuit (14) for controlling the signals transmitted by means of said transducer element (12) and for processing the signals received by said transducer element (12).

9. Process according to the claims 2 and 8, wherein said step of manufacturing said electric connector (8) comprises the co-moulding of said electric connector (8) with said shell (3).

10. Sensor device (1), usable in parking-aid systems for vehicles, and comprising:
- at least a support body (2) made of polymer material substantially hollow and having at least an opening (4);
- at least a metal element (9) having at least a substantially plate-shaped portion (10) arranged in correspondence to said opening (4) of the support body (2);
- at least a transducer element (12), arranged inside said support body (2) and in correspondence to said substantially plate-shaped portion (10) of the metal element (9);
- electronic interface means (14), arranged inside said support body (2) connected to said transducer element (12) and suitable for being connected to an electronic unit for the parking aid of vehicles;
- wherein said support body (2) comprises at least an electric connector (8) connected to said electronic circuit (14) and suitable for being connected to an electronic unit for the parking aid of vehicles;
- insulating material (16) for filling the inside of said support body (2), adapted to encapsulate said transducer element (12) and said electronic interface means (14).

11. Sensor device (1) according to the claim 12, wherein support body (2) comprises at least a shell (3) of plastic material having said opening (4).

12. Sensor device according to one or more of the claims 12 and 13, wherein said support body (2) comprises at least a seal (5) in silicone or the like arranged in correspondence to the perimeter of said opening (4).

13. Sensor device according to one or more of the claims from 12 to 14, wherein said electronic interface means (14) comprise at least an electronic circuit (14) for controlling the signals transmitted by means of said transducer element (12) and for processing the signals received by said transducer element (12).

## Patentansprüche

1. Verfahren zur Herstellung einer Sensorvorrichtung (1), die in Einparkhilfesystemen für Fahrzeuge verwendbar ist, welches die folgenden Schritte umfasst:
- Herstellen wenigstens eines Stützkörpers (2) aus Polymermaterial, wobei der Stützkörper (2) im Wesentlichen hohl ist und wenigstens eine Öffnung (4) aufweist;
- wobei der Schritt des Herstellens des Stützkörpers (2) das Anbringen wenigstens eines elektrischen Verbinders (8) auf dem Stützkörper (2) umfasst, der geeignet ist, um mit einer elektronischen Einheit für die Einparkhilfe von Fahrzeugen verbunden zu werden;
- Herstellen wenigstens eines Metallelements (9), das wenigstens einen im Wesentlichen plattenförmigen Abschnitt (10) aufweist;
- Verbinden des Metallelements (9) mit dem Stützkörper (2), so dass der im Wesentlichen plattenförmige Abschnitt (10) des Metallelements (9) in Entsprechung mit der Öffnung (4) des Stützkörpers (2) angeordnet ist;
- Verbinden wenigstens eines Wandlerelements (12) mit dem im Wesentlichen plattenförmigen Abschnitt (10) des Metallelements (9);
- Positionieren elektronischer Schnittstellenmittel (14), die geeignet sind, um mit einer elektronischen Einheit für die Einparkhilfe von Fahrzeugen verbunden zu werden, im Inneren des Stützkörpers (2);
- elektronisches Verbinden des Wandlerelements (12) mit den elektronischen Schnittstellenmitteln (14);
- elektronisches Verbinden der elektronischen Schnittstellenmittel (14) mit dem elektrischen Verbinder (8);
- Füllen des Stützkörpers (2) mit einem Isoliermaterial (16), das dazu eingerichtet ist, um das Wandlerelement (12) und die elektronischen Schnittstellenmittel (14) einzukapseln.

2. Verfahren nach Anspruch 1, wobei der Schritt des Herstellens des Stützkörpers (2) das Formen wenigstens eines Mantels (3) aus Kunststoffmaterial umfasst, der die Öffnung (4) aufweist.

3. Verfahren nach einem oder mehreren der vorhergehenden Ansprüche, wobei der Schritt des Herstellens des Stützkörpers (2) das Formen wenigstens einer Dichtung (5) aus Silikon oder dergleichen umfasst.

4. Verfahren nach den Ansprüchen 2 und 3, wobei der Schritt des Herstellens des Stützkörpers (2) das Positionieren der Dichtung (5) in Entsprechung mit der Öffnung (4) des Mantels (3) umfasst.

5. Verfahren nach den Ansprüchen 2 und 3, wobei der Mantel (3) und die Dichtung (5) durch Co-Formen zwischen dem Kunststoffmaterial und dem Silikon oder dergleichen erhalten werden, wobei die Dichtung (5) in Entsprechung mit der Öffnung (4) des Mantels (3) positioniert wird.

6. Verfahren nach den Ansprüchen 4 oder 5, wobei der Schritt des Verbindens des Metallelements (9) mit dem Stützkörper (2) das Einpassen des Metallelements (9) in die Dichtung (5) aus Silikon umfasst.

7. Verfahren nach einem oder mehreren der vorhergehenden Ansprüche, welches die folgenden Schritte umfasst:
- den Schritt des Verbindens wenigstens eines Wandlerelements (12) mit dem im Wesentlichen plattenförmigen Abschnitt (10) des Metallelements (9);
- wenigstens teilweises Bedecken des Wandlerelements (12), das mit dem im Wesentlichen plattenförmigen Abschnitt (10) verbunden ist, mit einem Isoliermaterial;
- den Schritt des Verbindens des Metallelements (9) mit dem Stützkörper (2), so dass der im Wesentlichen plattenförmige Abschnitt (10) des Metallelements (9) in Entsprechung mit der Öffnung (4) des Stützkörpers (2) angeordnet ist.

8. Verfahren nach einem oder mehreren der vorhergehenden Ansprüche, wobei die elektronischen Schnittstellenmittel (14) wenigstens eine elektronische Schaltung (14) zum Steuern der Signale, die mittels des Wandlerelements (12) gesendet werden, und zum Verarbeiten der Signale, die durch das Wandlerelement (12) empfangen werden, umfassen.

9. Verfahren nach den Ansprüchen 2 und 8, wobei der Schritt des Herstellens des elektrischen Verbinders (8) das Co-Formen des elektrischen Verbinders (8) mit dem Mantel (3) umfasst.

10. Sensorvorrichtung (1), die in Einparkhilfesystemen für Fahrzeuge verwendbar ist und umfasst:
- wenigstens einen Stützkörpers (2) aus Polymermaterial, der im Wesentlichen hohl ist und wenigstens eine Öffnung (4) aufweist;
- wenigstens ein Metallelement (9), das wenigstens einen im Wesentlichen plattenförmigen Abschnitt (10) aufweist, der in Entsprechung mit der Öffnung (4) des Stützkörpers (2) angeordnet ist;
- wenigstens ein Wandlerelement (12), das im Inneren des Stützkörpers (2) und in Entsprechung mit dem im Wesentlichen plattenförmigen Abschnitt (10) des Metallelements (9) angeordnet ist;
- elektronische Schnittstellenmittel (14), die im Inneren des Stützkörpers (2) angeordnet sind, mit dem Wandlerelement (12) verbunden sind und geeignet sind, um mit einer elektronischen Einheit für die Einparkhilfe von Fahrzeugen verbunden zu werden;
- wobei der Stützkörper (2) wenigstens einen elektrischen Verbinder (8) umfasst, der mit der elektronischen Schaltung (14) verbunden ist und geeignet ist, um mit einer elektronischen Einheit für die Einparkhilfe von Fahrzeugen verbunden zu werden;
- Isoliermaterial (16) zum Füllen des Inneren des Stützkörpers (2), das dazu eingerichtet ist, um das Wandlerelement (12) und die elektronischen Schnittstellenmittel (14) einzukapseln.

11. Sensorvorrichtung (1) nach Anspruch 12, wobei der Stützkörper (2) wenigstens einen Mantel (3) aus Kunststoffmaterial umfasst, der die Öffnung (4) aufweist.

12. Sensorvorrichtung nach einem oder mehreren der Ansprüche 12 und 13, wobei der Stützkörper (2) wenigstens eine Dichtung (5) aus Silikon oder dergleichen umfasst, die in Entsprechung mit dem Umfang der Öffnung (4) angeordnet ist.

13. Sensorvorrichtung nach einem oder mehreren der Ansprüche 12 bis 14, wobei die elektronischen Schnittstellenmittel (14) wenigstens eine elektronische Schaltung (14) zum Steuern der Signale, die mittels des Wandlerelements (12) gesendet werden, und zum Verarbeiten der Signale, die durch das Wandlerelement (12) empfangen werden, umfassen.

## Revendications

1. Procédé de fabrication d'un dispositif de capteur (1) utilisable dans des systèmes d'aide au stationnement pour véhicules comprenant les étapes consistant à :
- fabriquer au moins un corps de support (2) réalisé en matériau polymère, ledit corps de support (2) étant essentiellement creux et comportant au moins une ouverture (4) ;
- ladite étape consistant à fabriquer le corps de support (2) comprenant fabriquer sur ledit corps de support (2) au moins un connecteur électrique (8) apte à être relié à une unité électronique d'aide au stationnement de véhicules ;
- fabriquer au moins un élément métallique (9) comportant au moins une portion sensiblement en forme de plaque (10) ;
- associer ledit élément métallique (9) audit corps de support (2), ladite portion sensiblement en forme de plaque (10) de l'élément métallique (9) étant en correspondance avec ladite ouverture (4) du corps de support (2) ;
- associer au moins un élément transducteur (12) à ladite portion sensiblement en forme de plaque (10) de l'élément métallique (9) ;
- positionner à l'intérieur dudit corps de support (2) des moyens d'interface électronique (14) aptes à être reliés à une unité électronique d'aide au stationnement de véhicules ;
- relier électroniquement ledit élément transducteur (12) auxdits moyens d'interface électronique (14) ;
- relier électroniquement lesdits moyens d'interface électronique (14) audit connecteur électrique (8) ;
- remplir ledit corps de support (2) d'une matière isolante (16) adaptée à encapsuler ledit élément transducteur (12) et lesdits moyens d'interface électronique (14).

2. Procédé selon la revendication 1, dans lequel ladite étape consistant à fabriquer le corps de support (2) comprend le moulage d'au moins une coque (3) réalisée en matière plastique comportant ladite ouverture (4).

3. Procédé selon l'une ou plusieurs des revendications précédentes, dans lequel ladite étape consistant à fabriquer le corps de support (2) comprend le moulage d'au moins un joint d'étanchéité (5) en silicone ou similaire.

4. Procédé selon les revendications 2 et 3, dans lequel ladite étape consistant à fabriquer le corps de support (2) comprend le positionnement dudit joint d'étanchéité (5) en correspondance avec ladite ouverture (4) de la coque (3).

5. Procédé selon les revendications 2 et 3, dans lequel ladite coque (3) et ledit joint d'étanchéité (5) sont obtenus par comoulage entre ladite matière plastique et ledit silicone ou similaire, ledit joint d'étanchéité (5) étant positionné en correspondance avec ladite ouverture (4) de la coque (3).

6. Procédé selon les revendications 4 ou 5, dans lequel ladite étape consistant à associer l'élément métallique (9) au corps de support (2) comprend le montage dudit élément métallique (9) dans ledit joint d'étanchéité (5) en silicone.

7. Procédé selon l'une ou plusieurs des revendications précédentes, comprenant les étapes suivantes :
- ladite étape consistant à associer au moins un élément transducteur (12) à ladite portion sensiblement en forme de plaque (10) de l'élément métallique (9) ;
- une étape consistant à couvrir au moins partiellement ledit élément transducteur (12) associé à ladite portion sensiblement en forme de plaque (10) d'une matière isolante ;
- ladite étape consistant à associer ledit élément métallique (9) audit corps de support (2), ladite portion sensiblement en forme de plaque (10) de l'élément métallique (9) étant en correspondance avec ladite ouverture (4) du corps de support (2).

8. Procédé selon l'une ou plusieurs des revendications précédentes, dans lequel lesdits moyens d'interface électronique (14) comprennent au moins un circuit électronique (14) pour commander les signaux émis au moyen dudit élément transducteur (12) et pour traiter les signaux reçus par ledit élément transducteur (12).

9. Procédé selon les revendications 2 et 8, dans lequel ladite étape consistant à fabriquer ledit connecteur électrique (8) comprend le comoulage dudit connecteur électrique (8) avec ladite coque (3).

10. Dispositif de capteur (1), utilisable dans des systèmes d'aide au stationnement pour véhicules, et comprenant :
- au moins un corps de support (2) essentiellement creux réalisé en matériau polymère et comportant au moins une ouverture (4) ;
- au moins un élément métallique (9) comportant au moins une portion sensiblement en forme de plaque (10) agencée en correspondance avec ladite ouverture (4) du corps de support (2) ;
- au moins un élément transducteur (12) agencé à l'intérieur dudit corps de support (2) et en correspondance avec ladite portion sensiblement en forme de plaque (10) de l'élément métallique (9) ;
- des moyens d'interface électronique (14), agencés à l'intérieur dudit corps de support (2) reliés audit élément transducteur (12) et aptes à être reliés à une unité électronique d'aide au stationnement de véhicules ;
- ledit corps de support (2) comprenant au moins un connecteur électrique (8) relié audit circuit électronique (14) et apte à être relié à une unité électronique d'aide au stationnement de véhicules ;
- de la matière isolante (16) pour remplir l'intérieur dudit corps de support (2), adaptée à encapsuler ledit élément transducteur (12) et lesdits moyens d'interface électronique (14).

11. Dispositif de capteur (1) selon la revendication 12, dans lequel ledit corps de support (2) comprend au moins une coque (3) en matière plastique comportant ladite ouverture (4).

12. Dispositif de capteur selon l'une ou plusieurs des revendications 12 et 13, dans lequel ledit corps de support (2) comprend au moins un joint d'étanchéité (5) en silicone ou similaire agencé en correspondance avec le périmètre de ladite ouverture (4).

13. Dispositif de capteur selon l'une ou plusieurs des revendications de 12 à 14, dans lequel lesdits moyens d'interface électronique (14) comprennent au moins un circuit électronique (14) pour commander les signaux émis au moyen dudit élément transducteur (12) et pour traiter les signaux reçus par ledit élément transducteur (12).
